# EUROPÄISCHE PATENTANMELDUNG

(11) **EP 1 411 610 A1**
(43) Veröffentlichungstag der Anmeldung: **21.04.2004**
(21) Anmeldenummer: 03012788.0
(22) Anmeldetag: 05.06.2003
(51) Int. Cl.: H02G 3/08

(54) **Installationsdose sowie Einsatzstücke für Installationsdosen**

(30) Priorität: 16.10.2002 DE 20215932 U
(71) Anmelder: Fohs, Winfried, 66440 Blieskastel (DE)
(72) Erfinder: Fohs, Winfried, 66440 Blieskastel (DE)
(74) Vertreter: Wieske, Thilo

(57) **Zusammenfassung**

Die vorliegende Erfindung betrifft eine Installationsdose für die Elektroinstallation zum Einbau in Hohlwänden, wobei die Installationsdose in zumindest einem Bereich, der für eine Kabeleinführung vorgesehen ist, aus einem elastischen Material besteht. Weiterhin betrifft die Erfindung Einsatzstücke für Installationsdosen für die Elektroinstallation zum Einbau in Hohlwänden, wobei das Einsatzstück aus einem elastischen Material besteht und in seiner Form und Größe einer Öffnung angepasst ist, die sich bei einem Öffnen einer Solldurchführung für die Kabeleinführung in die Installationsdose ergibt.

## Beschreibung

Die vorliegende Erfindung betrifft eine Installationsdose für die Elektroinstallation nach dem Oberbegriff des Anspruchs 1 sowie Einsatzstücke für Installationsdosen nach Anspruch 5.

Es sind bereits derartige Installationsdosen für die Elektroinstallation zum Einbau in Hohlwänden bekannt. Derartige Hohlwände können beispielsweise entstehen, wenn auf ein Gestell aus Holz oder Metallstreben Gipskartonplatten aufgeschraubt werden. Diese Gipskartonplatten werden an ihren Verbindungsstellen mit Gips geglättet. Anschließend können derartige Wände gefliest, gestrichen oder tapeziert werden. Wegen der vergleichsweise geringen Wandstärke ist der Einbau bekannter Installationsdosen nicht möglich, die vollflächig mit ihrer Rückseite in entsprechende Wandöffnungen massiver Wände eingegipst werden. Bei derartigen baulichen Gegebenheiten werden andere Installationsdosen verwendet. Diese weisen an ihrem vorderen Außenumfang zwei längliche Schrauben auf, die entlang des zylinderförmigen Topfes, den die Installationsdose darstellt, nach hinten geführt sind. Auf diese Schrauben sind sogenannte Montagepratzen oder Spannpratzen aufgeschraubt. Im Montagezustand sind diese Montagepratzen in eine Aussparung des zylinderförmigen Topfes eingeschwenkt, so dass diese nicht aus dem kreisförmigen Außenumfang des zylinderförmigen Topfes heraus ragen. Durch ein Drehen der Schraube werden diese Montagepratzen aus dem Montagezustand heraus geschwenkt in einen Einbauzustand. In diesem Einbauzustand ragen die Montagepratzen über den Außenumfang des zylinderförmigen Topfes hinaus und schlagen an einem Gegenlager des zylinderförmigen Topfes an, so dass diese Montagepratzen bei einem Weiterdrehen der Schraube nicht mehr weiter drehbar sind. Dies führt dazu, dass die Montagepratzen bei einem weiteren Drehen der Schraube entlang der Längsrichtung der Schraube geführt werden. Beim Einbau werden die Montagepratzen durch eine Drehung der entsprechenden Schraube nach vorne gezogen bis die Montagepratzen die Hohlwand hintergreifen und dadurch die Installationsdose fixieren.

Zum Einbau derartiger Installationsdosen wird also lediglich ein Loch entsprechenden Durchmessers in die Hohlwand gebohrt. Die Installationsdose wird dann in dieses Loch eingeschoben. Die Montagepratzen sind dabei in dem Montagezustand entsprechend eingeschwenkt und stören beim Einschieben der Installationsdose nicht. Nach dem Einschieben wird die Installationsdose wie beschrieben durch ein Drehen der entsprechenden Schrauben mittels der Montagepratzen fixiert.

Die Kabel werden hinter der Hohlwand geführt, so dass diese verdeckt sind. Zur Einführung der Kabel in die Installationsdose sind Öffnungen vorgesehen derart, dass das Material der Installationsdose entlang der Außenlinie einer möglichen Öffnung als Sollbruchlinie ausgebildet ist. Diese möglichen Öffnungen werden auch als "Push-Out-Flächen" bezeichnet. Üblicher Weise sind verschieden große mögliche Öffnungen vorgesehen, um Kabel unterschiedlichen Durchmessers in die Installationsdose einführen zu können.

Diese Befestigung ist ausreichend, um ein Herausziehen der Installationsdose aus der Wand zu verhindern nach einem Einbau eines Schalters oder einer Steckdose in der Installationsdose und der damit verbundenen üblichen mechanischen Belastung.

Weiterhin sind Installationsdosen bekannt, die nicht lediglich zum Einbau eines Schalters bzw. einer Steckdose vorgesehen sind, sondern in die mehrere Schalter bzw. Steckdosen als Mehrfachkombination einbaubar sind. Die Öffnung zum Einbau einer derartigen Installationsdose in einer Hohlwand ist dann nicht mehr kreisförmig sondern muss entsprechend angepasst werden.

Der vorliegenden Erfindung liegt das Problem zu Grunde, die Kabeleinführung in derartige Installationsdosen zu verbessern.

Diese Aufgabe wird zum einen nach Anspruch 1 gelöst, wonach die Installationsdose in zumindest einem Bereich, der für eine Kabeleinführung vorgesehen ist, aus einem elastischen Material besteht.

Dadurch kann zum einen - abhängig von dem Grad der Elastizität des Materials in dem entsprechenden Bereich - vorteilhaft erreicht werden, dass das Kabel einfach in die Installationsdose einführbar wird. Beim Einführen des Kabels kann beispielsweise einfach das elastische Material mit dem Kabel durchstoßen werden, so dass zum einen das Kabel in die Installationsdose eingeführt ist. Weiterhin umschließt dann das Material das eingeführte Kabel in diesem Bereich. Dies führt wiederum dazu, dass das Kabel mechanisch gehalten wird, wobei die Haltekräfte von der Elastizität des Materials abhängen. Durch die mechanische Halterung ergibt sich eine Zugentlastung des Kabels. Neben der mechanischen Halterung ergibt sich als weiterer Vorteil, dass das Kabel abgedichtet in die Installationsdose eingeführt ist. Dadurch kann vermieden werden, dass Zugluft über die Installationsdose aus der Steckdose bzw. dem Schalter ausströmt. Derartige Zugluft kann sich hinter Hohlwänden beispielsweise dann ausbilden, wenn sich hinter der Hohlwand ein Installationsschacht zur Führung von zuleitenden Elektrokabeln, Wasser- und Abwasserrohren insbesondere über mehrere Stockwerke erstreckt. Als weiterer Vorteil ergibt sich aus dieser Ausführungsform, dass die Schallübertragung durch die Installationsdose verringert wird, wenn die in die Installationsdose eingeführten Kabel dicht umschlossen sind.

Abhängig von der Elastizität des Materials kann dieses so ausgebildet sein, dass sich eine Öffnung zumindest nahezu vollständig wieder verschließt, wenn ein Kabel durchgeführt wurde und dieses Kabel wieder entfernt wird.

Indem die Installationsdose lediglich in einem oder mehreren Bereichen aus dem elastischen Material besteht, ist die Installationsdose so ausgeführt, dass diese noch eine hinreichende Stabilität aufweist und sich auch bei üblicher mechanischer Belastung nicht verformt. Dies gilt insbesondere, was den sicheren Halt eines eingebauten Schalters sowie auch einer eingebauten Steckdose betrifft.

Bei der Ausführungsform nach Anspruch 1 ist der zumindest eine Bereich aus dem elastischen Material bei der Herstellung der Installationsdose ab Werk eingespritzt.

Bei der Ausgestaltung der Installationsdose nach Anspruch 2 ist der Bereich bzw. sind die Bereiche mit dem elastischen Material kreisförmig in Stufen nach außen ansteigend ausgebildet.

Dies erweist sind insbesondere beim Einführen dickerer Kabel in die Installationsdose als vorteilhaft, weil dann entsprechend der Dicke des Kabels durch den turmartigen Aufbau des Bereiches eine Öffnung vorgeschnitten werden kann, in die das Kabel eingeführt wird. Vorteilhaft wird dabei die Öffnung so geschnitten, dass deren lichte Weite geringer ist als der Durchmesser des Kabels, so dass das Kabel beim Einführen immer noch dicht umschlossen wird.

Bei der Ausgestaltung nach Anspruch 3 besteht das elastische Material aus einem Kunststoff. Dieser kann entsprechend der Ausgestaltung nach Anspruch 4 ein thermoplastischer Kunststoff sein, insbesondere ein thermoplastisches Elastomer.

Vorteilhaft lässt sich diese Installationsdose noch vergleichsweise einfach herstellen, indem diese Bereiche bei der Herstellung der Installationsdose als Kunststoffteile noch eingespritzt werden können.

Weiterhin betrifft die Erfindung gemäß der Ausführungsform nach Anspruch 5 ein Einsatzstück für Installationsdosen für die Elektroinstallation zum Einbau in Hohlwänden, wobei das Einsatzstück aus einem elastischen Material besteht und in seiner Form und Größe einer Öffnung angepasst ist, die sich bei einem Öffnen einer Solldurchführung für die Kabeleinführung in die Installationsdose ergibt.

Vorteilhaft lassen sich dadurch die durch Ausbrechen der sogenannten Push-Out-Flächen entstehenden Öffnungen in derartigen Installationsdosen wieder verschließen. Bei der Ausgestaltung nach Anspruch 5 können vorteilhaft die Installationsdosen in der bisher bekannten Weise hergestellt werden. Durch Einsetzen der Einsatzstücke in die Öffnungen nach dem Ausbrechen der Push-Out-Flächen können diese wieder verschlossen werden. Dabei können die Einsatzstücke gehalten werden, indem diese die Kante der Öffnung mit einem U-förmigen Kragen umschließen.

Vorteilhaft sind dabei die Einsatzstücke in ihrem Randbereich am Außenumfang aus einem Kunststoff mit einer geringeren Elastizität gefertigt, so dass die Einsatzstücke hinreichend formstabil sind und nach dem Einsetzen sicher an der Öffnung verbleiben, in die die Einsatzstücke eingesetzt wurden.

Die Einsatzstücke sind dabei in Form und Größe den Öffnungen angepasst, die sich beim Ausbrechen der Push-Out-Flächen ergeben. Diese Push-Out-Flächen erstrecken sich bei den bekannten Installationsdosen durchweg so, dass diese sich im Eckbereich des zylinderförmigen Topfes beidseitig der Eckkante erstrecken und somit einen Knick aufweisen. Die Einsatzstücke sind dann entsprechend angepasst. Um unterschiedlichen Formen und Größen der Push-Out-Flächen gerecht zu werden, können die Einsatzstücke in einem entsprechenden Sortiment hergestellt werden.

Vorteilhaft ergibt sich bei der Ausgestaltung nach Anspruch 5, dass die unterschiedlichen Materialien nicht beim Spritzvorgang bei der Herstellung eines Teiles gemeinsam verarbeitet werden müssen. Vielmehr können die Teil aus den verschiedenen Materialien separat bei der Herstellung verarbeitet werden.

Weiterhin ergibt sich als Vorteil, dass nach dem Ausbrechen einer Push-Out-Fläche, deren Öffnung nicht mehr benötigt wird, diese wieder verschlossen werden kann, indem ein entsprechendes Einsatzstück in diesem Falle als Blindverschluss eingesetzt wird.

Hinsichtlich der mechanischen Halterung des Kabels sowie auch der Abdichtung zur Vermeidung von Zugluft sowie der Verringerung der Schallübertragung ergeben sich dieselben Vorteile, die bereits im Zusammenhang mit Anspruch 1 erläutert wurden.

Bei der Ausgestaltung nach Anspruch 6 ist das Einsatzstück kreisförmig in Stufen nach außen ansteigend ausgebildet.

Dies erweist sind insbesondere beim Einführen dickerer Kabel in die Installationsdose als vorteilhaft, weil dann entsprechend der Dicke des Kabels durch den turmartigen Aufbau des Einsatzstückes eine Öffnung vorgeschnitten werden kann, in die das Kabel eingeführt wird. Vorteilhaft wird dabei die Öffnung so geschnitten, dass deren lichte Weite geringer ist als der Durchmesser des Kabels, so dass das Kabel beim Einführen immer noch dicht umschlossen wird.

Bei der Ausgestaltung nach Anspruch 7 bestehen die Einsatzstücke aus einem Kunststoff, der nach Anspruch 8 ein thermoplastischer Kunststoff, insbesondere ein thermoplastisches Elastomer sein kann.

Vorteilhaft sind dadurch die Einsatzstücke einfach herstellbar.

Ein Ausführungsbeispiel der Erfindung ist in der Zeichnung dargestellt. Es zeigt dabei:
- Fig. 1:: ein Beispiel einer Installationsdose,
- Fig. 2:: ein Beispiel für ein Einsatzstück und
- Fig. 3:: einen Schnitt durch ein Einsatzstück.

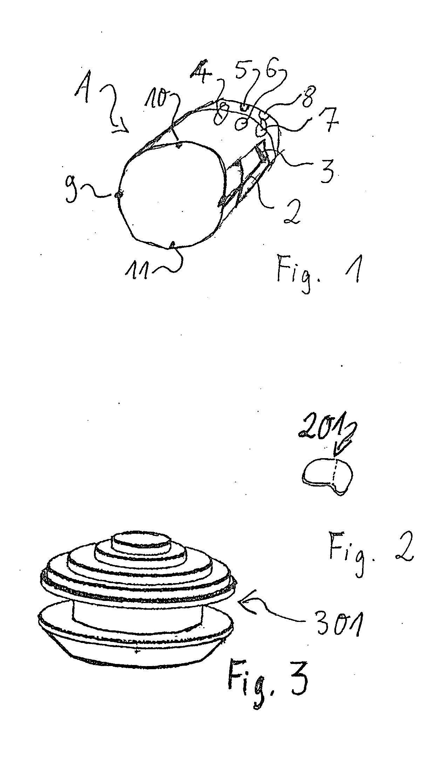

Figur 1 zeigt ein Ausführungsbeispiel für eine Installationsdose 1 für die Elektroinstallation, wobei die Installationsdose 1 zum Einbau in Hohlwänden vorgesehen ist. Seitlich ist auf einer Seite die Schraube 2 zu sehen, mittels der die Spannpratze 3 anziehbar ist, die auf diese Schraube 2 aufgeschraubt ist.

Es sind weiterhin Bereiche 4, 5, 6, 7, 8 zu sehen, in denen das Material der Installationsdose elastisch ist. Dieses Material kann ein thermoplastischer Kunststoff sein, insbesondere ein thermoplastisches Isomer. In den Bereichen 4, 5, 6, 7, 8 kann das Material stufenförmig ansteigend ausgebildet sein, vergleichbar der Darstellung eines Schnittes durch ein Einsatzstück, der in Figur 3 gezeigt ist. Dadurch kann eine Öffnung zur Durchführung eines Kabels vorgeschnitten werden.

Es ist auch möglich, die Bereiche 4, 5, 6, 7, 8 im wesentlichen eben auszubilden, wobei etwa in der Mitte ringförmig eine Materialverdickung vorgenommen wird, wobei der Ring einen Inndurchmesser von etwa 3 mm und einen Außendurchmesser von etwa 6 mm aufweisen kann. Im Inneren dieses Rings kann das Material wieder dünner ausgeführt sein. Insbesondere kann das Material dort auch dünner ausgeführt sein als außerhalb der ringförmigen Materialverdickung in den Bereichen 4, 5, 6, 7, 8. Dadurch wird dann das Einführen eines Kabels erleichtert, indem mit dem Kabel innerhalb der ringförmigen Materialverdickung der Bereich 4, 5, 6, 7, 8 durchstoßen wird. Durch die ringförmige Materialverdickung kann das Kabel effektiv gehalten werden.

Die Schraube 9 ist das Gegenstück zur Schraube 2. Die Schrauben 10 sowie 11 dienen der Befestigung der Schalter bzw. Steckdosen mittels der Langlöcher in den vorderen Blenden, die bei Schaltern oder Steckdosen vorhanden sind. Die Schalter bzw. Steckdosen werden mittels der Schrauben 10, 11 mechanisch in der Installationsdose 1 befestigt. Die Krallen der Schalter bzw. Steckdosen sind bei den hier beschriebenen Installationsdosen für Hohlwände nicht verwendbar, da diese Krallen sich durch die Installationsdose durchdrücken würden.

Figur 2 zeigt ein Einsatzstück 201 für eine Öffnung in einer Installationsdose, die entsteht, wenn bei einer bekannten Installationsdose eine der sogenannten Push-Out-Flächen heraus gebrochen wird. Das Einsatzstück 201 weist einen Knick auf, so dass das Einsatzstück 201 der Form entspricht, die die aus der Installationsdose heraus gebrochene Push-Out-Fläche aufweist. Diese Flächen entsprechen den Bereichen, die im Zusammenhang mit der Figur 1 mit den Bezugszeichen 4, 5, 6, 7, 8 versehen sind und in dem Beispiel der Figur 1 unmittelbar aus einem elastischen Material bestehen. Bei den bekannten Installationsdosen sind diese Bereiche als Push-Out-Flächen heraus brechbar. Bei dem Einsatzstück verläuft entlang des Außenumfangs eine U-förmige Wulst, mit der die Kante der Installationsdose entlang der heraus gebrochenen Push-Out-Bereiches umgriffen wird. Das Einsatzstück 201 wird dadurch in der Öffnung gehalten. Vorteilhaft ist das Einsatzstück an seinem Außenumfang aus einem Kunststoff mit einer geringeren Elastizität gefertigt, so dass die Halterung des Einsatzstückes in der Öffnung stabiler ist.

Figur 3 zeigt ein Einsatzstück 301. Dieses Einsatzstück ist eben dargestellt ohne Knick für eine kreisförmige Öffnung. Es sind verschiedene Bereiche zu sehen, die sich turmartig aufbauen. Dadurch ergeben sich definierte Öffnungen, wenn entsprechend entlang einer Stufe ein Stück heraus geschnitten wird. Die Durchführung eines Kabels kann dadurch erleichtert werden.

## Patentansprüche

1. Installationsdose (1) für die Elektroinstallation zum Einbau in Hohlwänden,
**dadurch gekennzeichnet, dass** die Installationsdose (1) in zumindest einem Bereich (4, 5, 6, 7, 8), der für eine Kabeleinführung vorgesehen ist, aus einem elastischen Material besteht.

2. Installationsdose nach Anspruch 1,
**dadurch gekennzeichnet, dass** der Bereich bzw. die Bereiche (4, 5, 6, 7, 8) mit dem elastischen Material kreisförmig in Stufen nach außen ansteigend ausgebildet sind.

3. Installationsdose nach Anspruch 1 oder 2,
**dadurch gekennzeichnet, dass** das elastische Material aus einem Kunststoff besteht.

4. Installationsdose nach Anspruch 3,
**dadurch gekennzeichnet, dass** das elastische Material ein thermoplastischer Kunststoff ist, insbesondere ein thermoplastisches Elastomer.

5. Einsatzstück (201) für Installationsdosen für die Elektroinstallation zum Einbau in Hohlwänden, wobei das Einsatzstück (201) aus einem elastischen Material besteht und in seiner Form und Größe einer Öffnung angepasst ist, die sich bei einem Öffnen einer Solldurchführung für die Kabeleinführung in die Installationsdose ergibt.

6. Einsatzstücke nach Anspruch 5,
**dadurch gekennzeichnet, dass** das Einsatzstück (201) kreisförmig in Stufen nach außen ansteigend ausgebildet ist (301).

7. Einsatzstück nach Anspruch 5 oder 6,
**dadurch gekennzeichnet, dass** das elastische Material aus einem Kunststoff besteht.

8. Einsatzstück nach Anspruch 7,
**dadurch gekennzeichnet, dass** das elastische Material ein thermoplastischer Kunststoff ist, insbesondere ein thermoplastisches Elastomer.
